(19)

Europäisches
Patentamt

European
Patent Office

Office européen
des brevets

(11)　　**EP 2 805 815 A1**

(12)　　# EUROPEAN PATENT APPLICATION

(43) Date of publication:
　　**26.11.2014　Bulletin 2014/48**

(51) Int Cl.:
　　***B32B 7/00*** (2006.01)

(21) Application number: **14169035.4**

(22) Date of filing: **20.05.2014**

(84) Designated Contracting States:
　　**AL AT BE BG CH CY CZ DE DK EE ES FI FR GB
　　GR HR HU IE IS IT LI LT LU LV MC MK MT NL NO
　　PL PT RO RS SE SI SK SM TR**
　　Designated Extension States:
　　**BA ME**

(30) Priority: **22.05.2013　JP 2013108105**

(71) Applicant: **Hosokawa Yoko Co., Ltd.
　　Tokyo 102-0084 (JP)**

(72) Inventors:
　　• **Kobayashi, Yukio
　　　Tokyo 143-0023 (JP)**
　　• **Kageyama, Yohei
　　　Tokyo 102-0084 (JP)**
　　• **Maruyama, Takuro
　　　Tokyo 102-0084 (JP)**

(74) Representative: **Tack, Jens
　　Strehl Schübel-Hopf & Partner
　　Maximilianstrasse 54
　　80538 München (DE)**

(54)　　**Molded fastener part**

(57)　　This invention provides a molded fastener part having a good heat-bondability to PET resin film and being excellent in flexibility and sealability, comprising a substrate layer, a fastening rail layer comprising a polyolefin resin and having a groove portion or a rib portion, and an adhesive layer located therebetween, wherein said substrate layer is made of a polyethylene terephthalate resin composition comprising 100 parts by weight of polyethylene terephthalate, 0.1-3 parts by weight of styrene-methyl (metha) acrylate-glycidyl methacrylate copolymer, 3-20 parts by weight of softening agent, and 0.05-1.5 parts by weight of molding assistant, and said adhesive layer comprises a copolymer of ethylene and a monomer containing epoxy group, or a copolymer of ethylene, (metha) acrylate ester and a dicarboxylic anhydride monomer.

〔Fig. 1〕

EP 2 805 815 A1

**Description**

Technical Field:

This invention relates to a strip-shaped molded fastener part used for opening and closing of a packaging bag, and more particularly to a strip-shaped molded fastener part which can be bonded by heat to polyethylene terephthalate film and which has fittability and flexibility capable of repeating opening and closing.

Background Art:

Polyolefin-based resin films of which the principal component is polyethylene or polypropylene are excellent in safety and heat sealability, and are used as the inner surface layer to be in contact with the contents of most of packaging bags made of synthetic resin for containing foods, medicines or the like.
However, the polyolefin-based resin has a high permeability and adsorbability of odors, and when it is used as the inner material, it sometimes degrades commercial values by the generation of called "plastic odor", or the migration or adsorption of the medicinal component or odor component of the contents.
Whereas, polyester films, particularly polyethylene terephthalate (herein after, occasionally referred to as "PET") film do not adsorb them, and are excellent in safety and heat resistance. Therefore, they are used as the inner layer of packaging bags. According to the use of the packaging bag, contents are divided, and used plural times. Bags provided with a fastener member are useful which is a strip-shaped engaging device capable of repeating opening and closing by fitting a rib into a groove. However, conventional fasteners made of polyethylene or polypropylene are not heat-bonded to PET film, and there is no practical fastener part which is heat-bondable to PET film. When the fastener part is made by PET resin, it is possible to heat-bond it to PET film. However, since PET resin is a rigid material and inferior in flexibility, problems occurred that the rib and groove portions of the fastener member are deformed permanently by repeating opening and closing and flexing to degrade fittability.
In order to solve these problems, as a molded fastener part capable of heat-bonding to sealant layer made of polyester resin, an engaging device made of a composition composed of a polyester elastomer and a polyolefin resin or polybutylene terephthalate resin and a polyolefin resin, is disclosed (Patent Document 1). However, it is difficult to satisfy both of sufficient heat-bonding strength to the inner surface of bag and repeating fittability capable of sealing bag even repeating opening of the fastener parts.

Prior Art Document:

Patent Document:

   Patent Document 1: JP 7-52961 A

Summary of The Invention:

Problem to be Solved by The Invention:

It is an object of the invention to provide a molded fastener part which can be heat-bonded to polyethylene terephthalate film and has a fittability and flexibility capable of maintaining sealability of bag even by repeating opening.
The present invention has been made in order to achieve the above object, and provides a molded fastener part which comprises, a substrate layer, a fastening rail layer comprising a polyolefin resin and having a groove portion or a rib portion, and an adhesive layer located therebetween, wherein,
said substrate layer is made of a polyethylene terephthalate resin composition comprising 100 parts by weight of polyethylene terephthalate, 0.1-3 parts by weight of styrene-methyl (metha) acrylate-glycidyl methacrylate copolymer, 3-20 parts by weight of softening agent, and 0.05-1.5 parts by weight of molding assistant, and,
said adhesive layer comprises a copolymer of ethylene and a monomer containing epoxy group, or a copolymer of ethylene, (metha) acrylate ester and a dicarboxylic anhydride monomer.

Effects of The Invention:

According to the invention, a molded fastener part which can be heat-bonded to polyethylene terephthalate film, and has fittability and flexibility capable of repeating opening and closing, is provided.

Brief Description of The Drawing:

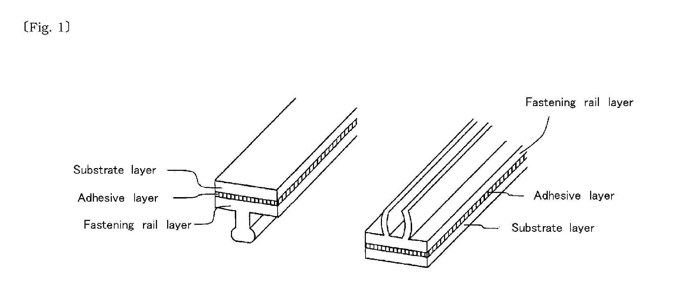

Figure 1 is a perspective view of molded fastener parts which are examples of the invention.

Mode for Carrying Out The Invention:

The molded fastener part of the invention is, as shown in Figure 1, a strip-shaped molded article wherein the substrate layer, the adhesive layer and the fastening rail layer are laminated in this order.

Substrate Layer:

The substrate layer is heat-bonded with the inner face of bag, to fix the molded fastener part to the inner face of bag, is formed in a strip shape having a width of about 5-20mm, typically about 8-15mm, and a thickness of about 20-100 μm, typically about 30-60μm.

The substrate layer of the molded fastener part of the invention is made a polyethylene terephthalate resin composition.

It is preferred that the PET resin employed in the polyethylene terephthalate resin composition of the invention has an intrinsic viscosity of 0.6-0.8 dl/g, more preferably 0.6-0.7 dl/g, further more preferably 0.6-0.65 dl/g measured by the Ubbellohde viscometer at 25°C in a state dissolved in a mixed solvent of phenol: tetrachloroethane of 1:1. When it is lower than 0.6 dl/g, melt viscosity is insufficient to render molding unstable. While, when it exceeds 0.8 dl/g, it is difficult to exhibit heat sealability with the PET resin film to be heat-bonded thereto. The PET resin may be single or a combination of two or more types.

The PET resin employed in the invention may be a recycle resin regenerated from molded articles, such as films or bottles made of PET, which satisfy the above conditions, in addition to virgin resins.

It is preferred that the styrene-methyl (metha) acrylate-glycidyl methacrylate copolymer employed in the invention has an epoxy value of 0.5-4.0 meq/g, more preferably 1.0-2.5 meq/g, measured by the ASTM D-1652. When the epoxy value is less than 0.5 meq/g, the melt viscosity sufficient for molding cannot be maintained. Moreover, the crystallinity of the fastener part described later in detail does not lower into the desired range, and not only the heat sealability is not exhibited sufficient to the PET resin film, but also bending flexibility is lowered by that the molded fastener part becomes rigid. While, when it exceeds 4.0 mdg/g, recombination between PET molecules proceeds excessively to generate gel-shaped foreign matters frequently.

Examples of the styrene-methyl (metha) acrylate-glycidyl methacrylate copolymer are described for example in JP 2005-154690 A as styrene copolymers having epoxy groups, and are commercially available from BASF Japan Ltd. as JONCRYL® and Toa Gosei Co., Ltd. as ARUFON®. The styrene-methyl (metha) acrylate-glycidyl methacrylate copolymer may be single or a combination of two or more types.

The softening agent employed in the invention means a material having affinity with PET resin and being replete with flexibility. Illustrative of the softening agent are ethylene-(metha) acrylate ester copolymer and polyester copolymer. Preferred examples of the former are ethylene-glycidyl methacrylate copolymer and ethylene-butyl acrylate copolymer. Preferred examples of the latter are polyester of which crystallinity has been lowered, such as, copolymer of terephthalic acid-ethylene glycol-1, 4-cyclohexane dimethanol, copolymer of hard component of polyester and a soft component of polyether. These are commercially available, and they can be used.

The molding assistant which is preferred for the invention includes metal salts of a saturated or unsaturated fatty acid having a number of carbon atoms of about 10-20, such as stearic acid, lauric acid, ricinoleic acid or octoic acid, and a metal of alkali metal, alkaline earth metal or zinc family, such as lithium, magnesium, calcium barium or zinc. Specific examples are lithium stearate, magnesium stearate, calcium stearate, barium stearate, zinc stearate, calcium laurate, barium laurate, zinc laurate, barium ricinolate, zinc ricinolate, zinc octate, and the like, and calcium stearate is particularly preferred because of being excellent in safety and sanitation as a packaging material for foods and medicines.

To the PET resin composition of the substrate layer, a dispersing assistant (which acts to moisten the surface of the molding assistant particles to render the dispersion uniform,) may be added. Preferred dispersing assistant are multifunctional higher fatty acid esters having epoxy groups. As the typical dispersing assistant, epoxidized soybean oil and epoxidized linseed oil can be listed.

To the PET resin composition of the invention, other materials may be incorporated so far as exhibiting the function of the invention.

As to the blending ratio of the PET resin composition, about 0.1-3 parts by weight of styrene-methyl (metha) acrylate-glycidyl methacrylate copolymer, about 3-20 parts by weight of softening agent and about 0.05-1.5 parts by weight of molding assistant are suitable per 100 parts by weight of PET resin.

In the above resin composition, the softening agent is blended in an amount of 3-20 parts by weight. When the amount of the softening agent is less than 3 parts by weight, the rigidity of the molded fastener part is too high resulting in that function of the product cannot be exhibited enough. Whereas, when it exceeds 20 parts by weight, the molded fastener part is softened in excess to decrease remarkably fittability and resistance to opening as the fastener, and therefore, is unfavorable.

Fastening Rail Layer:

The molded fastener part of the invention is composed of a couple of members, one has a fitting groove, and the other has a fitting rib. Therefore, the fastening rail layer has a section of groove-shaped or rib-shaped, and seal function is exhibited by fitting the rib-shaped portion into the groove-shaped portion. The shape may be identical with plastic bags with fastener, and the width may be identical with the substrate layer, unless otherwise special requirements.

The resin used for the fastening rail layer is polyolefin resin. The polyolefin resin includes, but is not limited to, polypropylene resin, polyethylene resin or the like. Preferred resin is polyethylene resin, because of being replete with bending ability, flexibility, and excellent in fittability during repeating opening and closing, and also excellent in the low temperature fittability even at 5°C. As the polyethylene resin, ethylene homopolymers or ethylene-$\alpha$-olefin copolymers, having a density of 940 kg/ $m^3$ or more, or a mixture thereof can be used. In view of the improvement in heat resistance, ethylene homopolymers having a density of 950 kg/$m^3$ or more are preferred. Preferable melt flow rate (MFR) is 2-8g/10 minutes in terms of molding stability. Manufacturing process of the polyethylene is not particularly limited, and may be manufactured by using any catalyst. Actually, those manufactured by using a Ziegler-Natta catalyst or a metallocene catalyst are preferred.

Adhesive Layer:

The adhesive layer is interposed between the substrate layer and the fastening rail layer, and bonds both layers, and the thickness is about 10-60$\mu$m, typically about 20-50$\mu$m. The resin employed for the adhesive layer of the molded fastener part of the invention has good heat-bondability to both of the PET resin composition of the aforementioned substrate layer adjacent to one side of the adhesive layer and the polyolefin resin of the fastening rail layer adjacent to the other side, and is composed of at least one of a copolymer of ethylene and a monomer containing epoxy group or a copolymer of ethylene and (metha) acrylate ester and an of dicarboxylic anhydride monomer.

Hereupon, illustrative of the monomers containing epoxy group are glycidyl (metha) acrylate, glycidyl : tacorate and the like. Illustrative of the (metha) acrylate esters are methyl (metha) acrylate, ethyl (metha) acrylate, propyl (metha) acrylate, butyl (metha) acrylate, 2-ethylhexyl (metha) acrylate and the like. Illustrative of the anhydrides of dicarboxylic acid and are maleic anhydride, itaconic anhydride, endic anhydride, citraconic anhydride, and the like.

There are commercial products of the copolymer of ethylene and a monomer containing epoxy group and the copolymer of ethylene-(meth) acrylate ester and a dicarboxylic anhydride monomer, such as "BONDFAST E" manufactured by Sumitomo Chemical Co., Ltd. and "BONDINE®" manufactured by ARKEMA, and they can be used.

The manufacturing process of the molded fastener part of the invention is not critical, and for example, is produced by coextrusion of the substrate layer, the adhesive layer and the fastening rail layer at 240-300°C. The detailed reason why the molded fastener part of the invent has heat sealability with PET resin film is not certain, but it is considered that, by the heating upon molding, the reaction of bonding a small amount of the carboxyl group at a terminal of molecular chain of the PET resin of the substrate layer with the epoxy group of the styrene-methyl (metha) acrylate-glycidyl methacrylate copolymer, the reaction of hydrolysis of the PET by the minor moisture content contained in the PET resin, and the reaction of bonding the carboxyl group produced by the above-mentioned hydrolysis with the above-mentioned epoxy group, proceed simultaneously, and the heat sealability appears by that the PET is made a higher molecular weight and lower crystallinity which are suitable for forming film and molding. Therefore, it is preferable to use a triple layer molding machine which equips a melt extruder provided with a profile die with a vent mechanism capable of removing unreacted matters and side reaction products as the melt extruder for molding the substrate layer, and the PET resin composition for the substrate layer is heated and compressed in the melt extruder while removing moisture and gases to mold the multilayer fastener. The extrusion molded fastener part is wound up with cooling by passing a water bath adjusted at a water temperature of 5-35 °C so that crystallization does not proceed.

The fastener part can be integrated with a PET resin film by heat-bonding, can conduct sealing and opening by fitting the rib portion into the groove portion, and has flexibility as a packaging material and resistance to bending.

Since the heat-bonding is carried out by pressing a sealer hot plate to both sides or one side of the flange portions avoiding the fastening portion, heating to the fitting groove or the fitting rib of the fastening rail layer is little, and their deformation does not occur. Since the pressing time is short, the deformation of the polyolefin resin in the flange portions of the fastening rail layer by the contact with the sealer hot plate does not become a problem in practical viewpoint. Since the crystallinity of the substrate layer is restrained low, the heat-bonding can be performed even at a temperature lower than the melting point of polyethylene terephthalate that is the melting temperature of the crystal of polyethylene terephthalate. The heat-bonding can be conducted at a temperature of the sealer hot plate of about 130-260°C, typically about 160-200°C.

It is preferred that the substrate layer of the fastening rail layer of the invention has a crystallinity $\chi_c$ of 6-11.5%. The crystallinity is determined from the enthalpy of fusion $\Delta H_m$ and the enthalpy of crystallization $\Delta H_{cl}$ which are detected by a differential scanning calorimeter (DSC), and calculated by the following formula (a). More preferable crystallinity is 6.0-9.5%.

$$\chi_c = 100 \times (\Delta H_m - \Delta H_{cl}) / 140 \cdots (a)$$

Examples:

The present invention will be described in more detail by the following examples.

The following materials were used.

- PET-1: Polyethylene terephthalate resin, Unitika Ltd. "MA-2101M", Density: 1340kg/m$^3$, Melting point: 255°C, Intrinsic viscosity: 0.62dl/g
- PET-2: Polyethylene terephthalate resin, LiPeng "S103", Density: 1340kg/m$^3$, Melting point: 252 °C , Intrinsic viscosity: 0.80dl/g
- StGM-1: Styrene-methyl (metha) acrylate-glydicyl methacrylate copolymer, Weight-average moleculer weight: 10800, epoxy values: 1.8meq/g,Tg: 52°C
- StGM-2: Styrene-methyl (metha) acrylate-glydicyl methacrylate copolymer, Weight-average moleculer weight: 6700, epoxy values: 3.5meq/g, Tg: 54°C
- Soft-1: Ethylene-butylacrylate copolymer, Butyl acrylate content: 30%, Density: 930kg/m$^3$, Melting point: 78°C
- Soft-2: Glycol-modified polyester (polycyclohexylene dimethylene terephthalate), Density: 1290kg/m$^3$, Eastman Chemical EB062
- StCa: Calcium stearate, Sakai Chemical Industry Co., Ltd. "SC-100"
- ESO: Epoxidized soybean oil, Adeka "ADKCIZER O-130P"
- Ad-1: Dicarboxylic acid anhydride-graft polyethylene, Mitsubishi Chemical Corporation "MODICM545", Density: 900kg/m$^3$, Melting opint: 111°C
- Ad-2: Ethylene-glycidyl methacrylate copolymer, Sumitomo Chemical Co., Ltd. "BONDFAST E", Density: 940kg/m$^3$, Melting point: 103°C
- Ad-3: Ethylene-acrylate ester-meleic anhydride copolymer, ARKEMA "BONDINE® TX8030", MFR: 5g/10 minutes, Melting point: 95°C
- LLDPE: Linear low density polyethylene, Prime Polymer "Evolue SP2530S", MFR: 2.6g/10 minutes, Density: 924kg/m$^3$, Melting point: 122°C
- PET film: Teijin Dupont Films Co., Ltd. "Mylar Film", Thickness: 15$\mu$m

Manufacture of Molded Fastener Part:

The mixtures having each composition described in Table 1 were melt-extruded at an extrusion temperature of 265°C by using a triple layer extruder which was provided with three extruders equipped with a Dulmage screw at a compression ratio of 2.8, L/D = 32, diameter: 40mm, to produce molded articles. Profile dies forming a groove-shaped fastener portion or a rib-shaped fastener portion having a width of 8mm were connected to the top of the triple layer extruder.

The size of the substrate layer is 8mm in width and 40$\mu$m in thickness, and the adhesive layer is 40$\mu$m in thickness. The sheet-shaped portion of the fastening rail layer is 40$\mu$m in thickness, and the outside width of the fitting groove is 3mm, and the height of fitting rib is 4mm.

Crystallinity of Substrate Portion of Molded Part:

Determined by the aforementioned formula (a).

Evaluation of Heat-Bondability to PET Resin Film:

The molded part was superimposed on the PET resin film, and the tape-shaped flange portion was heat-sealed at a temperature of 180°C, a pressure of 0.2 MPa for a heat-sealing time of 0.8 second, and heat-bondability between the PET film and the molded fastener part was evaluated. In the case that molded fastener part was bonded well to the PET resin film, and no problem occurred in the bonding of the molded fastener part to the PET film during the evaluation of fittability as fastener, it was evaluated no problem in heat-bonding.

Evaluation of Fittability as Faxtener:

Three sides of the two rectangular PET resins film, to which the aforementioned molded fastener part was heat-bonded, were heat-sealed to prepare a bag with fastener having an inside size of 100 x 100mm. 50ml of water was put therein, and opening and closing of the bag was repeated 30 times. Then, the bag was inverted, and evaluated whether leakage of water was occurred or not.

[Table 1]

| Resin Composition of Substrate Layer | Blending Rate | | | | |
|---|---|---|---|---|---|
| | PET(100 wt. part) | Glycidyl Copolymer (wt. part) | Softening Agent (wt. part) | Molding Assistant (wt. part) | Dispersing Assistant (wt. part) |
| Composition A | PET-1 | StGM-1 (2.7) | Soft-1 (10) | StCa (0.3) | ESO (0.1) |
| Composition B | PET-2 | StGM-1 (1.2) | Soft-1 (10) | StCa (0.3) | ESO (0.1) |
| Composition C | PET-1 | StGM-2 (0.48) | Soft-2 (4) | StCa (0.1) | none |
| Composition D | PET-2 | StGM-2 (0.27) | Soft-2 (18) | StCa (1.4) | ESO (0.1) |
| Composition E | PET-1 | StGM-1 (0.05) | Soft-1 (10) | StCa (0.3) | ESO (0.1) |
| Composition F | PET-2 | StGM-1 (0.05) | Soft-1 (10) | StCa (0.3) | ESO (0.1) |
| Composition G | PET-1 | StGM-1 (3.5) | Soft-1 (10) | StCa (0.3) | ESO (0.1) |
| Composition H | PET-2 | StGM-1 (3.5) | Soft-1 (10) | StCa (0.3) | ESO (0.1) |
| Composition I | PET-1 | StGM-1 (2.1) | Soft-1 (1) | StCa (0.3) | ESO (0.1) |
| Composition J | PET-2 | StGM-1 (1.2) | Soft-1 (1) | StCa (0.3) | ESO (0.1) |
| Composition K | PET-1 | StGM-1 (2.1) | Soft-1 (30) | StCa (0.3) | ESO (0.1) |
| Composition L | PET-2 | StGM-1 (1.2) | Soft-1 (30) | StCa (0.3) | ESO (0.1) |
| Composition M | PET-1 | StGM-1 (2.1) | Soft-1 (10) | StCa (0.02) | ESO (0.1) |
| Composition N | PET-2 | StGM-1 (1.2) | Soft-1 (10) | StCa (0.02) | ESO (0.1) |
| Composition O | PET-1 | StGM-1 (2.1) | Soft-1 (10) | StCa (3) | ESO (0.1) |
| Composition P | PET-2 | StGM-1 (1.2) | Soft-1 (10) | StCa (3) | ESO (0.1) |

The results are shown in Table 2.

[Table 2-1]

| Example | Substrate Layer | Adhesive layer | Fastening Rail Layer | Crystallinity (%) |
|---|---|---|---|---|
| Example 1 | Composition A | Ad-2 | LLDPE | 6.9 |
| Example 2 | Composition B | Ad-2 | LLDPE | 9.5 |
| Example 3 | Composition C | Ad-2 | LLDPE | 8.3 |
| Example 4 | Composition D | Ad-2 | LLDPE | 10.4 |
| Example 5 | Composition A | Ad-3 | LLDPE | 7.2 |
| Example 6 | Composition B | Ad-3 | LLDPE | 9.2 |
| Example 7 | Composition C | Ad-3 | LLDPE | 8.8 |
| Example 8 | Composition D | Ad-3 | LLDPE | 9.4 |
| Comparative 1 | Composition E | Ad-2 | LLDPE | - |

(continued)

| Example | Substrate Layer | Adhesive layer | Fastening Rail Layer | Crystallinity (%) |
|---|---|---|---|---|
| Comparative 2 | Composition F | Ad-2 | LLDPE | - |
| Comparative 3 | Composition G | Ad-2 | LLDPE | - |
| Comparative 4 | Composition H | Ad-2 | LLDPE | - |
| Comparative 5 | Composition I | Ad-2 | LLDPE | 7.8 |
| Comparative 6 | Composition J | Ad-2 | LLDPE | 10.4 |
| Comparative 7 | Composition I | Ad-3 | LLDPE | 8.3 |
| Comparative 8 | Composition J | Ad-3 | LLDPE | 10.0 |
| Comparative 9 | Composition K | Ad-2 | LLDPE | 7.7 |
| Comparative 10 | Composition L | Ad-3 | LLDPE | 9.8 |
| Comparative 11 | Composition A | Ad-1 | LLDPE | 7.4 |
| Comparative 12 | Composition B | Ad-1 | LLDPE | 10.3 |
| Comparative 13 | Composition M | Ad-2 | LLDPE | - |
| Comparative 14 | Composition N | Ad-3 | LLDPE | - |
| Comparative 15 | Composition O | Ad-2 | LLDPE | - |
| Comparative 16 | Composition P | Ad-3 | LLDPE | - |

[Table 2-2]

| Example | Heat-Bondability | Fittability |
|---|---|---|
| Example 1 | No problem | No leakage of water |
| Example 2 | No problem | No leakage of water |
| Example 3 | No problem | No leakage of water, although rigid |
| Example 4 | No problem | No leakage of water, although surface roughness was seen on the substrate layer |
| Example 5 | No problem | No leakage of water |
| Example 6 | No problem | No leakage of water |
| Example 7 | No problem | No leakage of water, although rigid |
| Example 8 | No problem | No leakage of water, although surface roughness was seen on the substrate layer |
| Comparative 1 | Could not molded by the cutting of the substrate layer during molding | |
| Comparative 2 | Could not molded by the cutting of the substrate layer during molding | |
| Comparative 3 | Could not molded by the elevation of resin pressure and amount of electric current of extruder motor | |
| Comparative 4 | Could not molded by the elevation of resin pressure and amount of electric current of extruder motor | |
| Comparative 5 | No problem | Regidity was remarkably high to lose flexibility as a fastener, and ruptured upon opening or closing. |
| Comparative 6 | No problem | Regidity was remarkably high to lose flexibility as a fastener, and ruptured upon opening or closing. |

(continued)

| Example | Heat-Bondability | Fittability |
|---|---|---|
| Comparative 7 | No problem | Regidity was remarkably high to lose flexibility as a fastener, and ruptured upon opening or closing. |
| Comparative 8 | No problem | Regidity was remarkably high to lose flexibility as a fastener, and ruptured upon opening or closing. |
| Comparative 9 | No problem | Resistance to opening /closing at fastener was remarkably lowered to leak water |
| Comparative 10 | No problem | Resistance to opening /closing at fastener was remarkably lowered to leak water |
| Comparative 11 | Substrate layer was separated from adhesive layer while once opening upon evaluation of fittability | |
| Comparative 12 | Substrate layer was separated from adhesive layer while once opening upon evaluation of fittability | |
| Comparative 13 | Uniform composition of which practical value can be evaluated could not be molded caused by pulsation of thinkness or width due to unstable extrusion of substrate layer. | |
| Comparative 14 | Uniform composition of which practical value can be evaluated could not be molded caused by pulsation of thinkness or width due to unstable extrusion of substrate layer. | |
| Comparative 15 | Uniform composition could not be molded caused by unstable feeding of raw material of substrate layer due to sticking immediately under hopper | |
| Comparative 16 | Uniform composition could not be molded caused by unstable feeding of raw material of substrate layer due to sticking immediately under hopper | |

Industrial Applicability:

The molded fastener part of the invention is heat-bondable to polyethylene terephthalate film and has repeating fittability and flexibility. Therefore, it can be used widely as a resealable member for packaging bags of which the inner layer is composed of PET resin.

**Claims**

1. A molded fastener part which comprises, a substrate layer, a fastening rail layer comprising a polyolefin resin and having a groove portion or a rib portion, and an adhesive layer located therebetween, wherein,
said substrate layer is made of a polyethylene terephthalate resin composition comprising 100 parts by weight of polyethylene terephthalate, 0.1-3 parts by weight of styrene-methyl (metha) acrylate-glycidyl methacrylate copolymer, 3-20 parts by weight of softening agent, and 0.05-1.5 parts by weight of molding assistant, and,
said adhesive layer comprises a copolymer of ethylene and a monomer containing epoxy group, or a copolymer of ethylene, (metha) acrylate ester and a dicarboxylic anhydride monomer.

2. The molded fastener part as set forth in claim 1, wherein said polyethylene terephthalate has an intrinsic viscosity of 0.6-0.8 dl/g.

3. The molded fastener part as set forth in claim 1, wherein said styrene-methyl (metha) acrylate-glycidyl methacrylate has an epoxy value of 0.5-4.0 meq/g.

4. The molded fastener part as set forth in claim 1, wherein said polyethylene terephthalate forming the substrate layer has a crystallinity of 6-11.5%.

[Fig. 1]

Substrate layer

Adhesive layer

Fastening rail layer

Fastening rail layer

Adhesive layer

Substrate layer

Europäisches
Patentamt

European
Patent Office

Office européen
des brevets

**EUROPEAN SEARCH REPORT**

Application Number

EP 14 16 9035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2013/076934 A1 (HOSOKAWA YOKO KK [JP]; NISSEI CHEMICAL CO LTD [JP]; SHOKO PLASTICS PRO) 30 May 2013 (2013-05-30) * - Same Applicant - * * WPI abstract * * Figures * * EPODOC abstract * * the whole document * | 1-4 | INV. B32B7/00 B32B7/02 B32B7/04 B32B7/10 B32B7/12 B32B27/00 B32B27/06 B32B27/08 B32B27/18 |
| Y | US 2006/104550 A1 (KUGE RAIZO [JP] ET AL) 18 May 2006 (2006-05-18) * claim 1 - "groove" * * paragraph [0067] * * figures 1-2 * * paragraph [0065] - paragraph [0066] * * figures * | 1-4 | B32B27/30 B32B27/32 B32B27/36 B32B27/38 B32B1/00 B32B1/04 B32B3/00 |
| Y | WO 2011/148992 A1 (HOSOKAWA YOKO KK [JP]; NISSEI CHEMICAL CO LTD [JP]; KAGEYAMA YOHEI [JP] 1 December 2011 (2011-12-01) * WPI abstract * * EPODOC abstract * | 1-4 | B32B3/02 |
| A | JP 2000 142731 A (SHOWA HIGHPOLYMER) 23 May 2000 (2000-05-23) * EPODOC abstract * * Figure * * WPI abstract * | 1-4 | TECHNICAL FIELDS SEARCHED (IPC) B32B B65D C08J C08L |
| A | JP 2009 112542 A (HOSOKAWA YOKO KK) 28 May 2009 (2009-05-28) * EPODOC abstract * * Figures * | 1-4 | |

-/--

The present search report has been drawn up for all claims

| Place of search | Date of completion of the search | Examiner |
|---|---|---|
| The Hague | 28 August 2014 | Hammond, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 16 9035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2003 095286 A (HOSOKAWA YOKO KK; OBARA GIKEN KK; IDEMITSU UNITECH CO LTD) 3 April 2003 (2003-04-03) * EPODOC abstact * * Figure * * WPI abstract * | 1-4 | B32B3/06 B32B3/30 B65D33/25 C08J5/18 C08L67/02 |

-----

TECHNICAL FIELDS
SEARCHED      (IPC)

The present search report has been drawn up for all claims

| Place of search | Date of completion of the search | Examiner |
|---|---|---|
| The Hague | 28 August 2014 | Hammond, Andrew |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**
EP 14 16 9035

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2014

| Patent document cited in search report | | | Publication date | Patent family member(s) | | | Publication date |
|---|---|---|---|---|---|---|---|
| WO 2013076934 | A1 | | 30-05-2013 | NONE | | | |
| US 2006104550 | A1 | | 18-05-2006 | AU | 2003221407 | A1 | 11-10-2004 |
| | | | | CN | 1759046 | A | 12-04-2006 |
| | | | | EP | 1607340 | A1 | 21-12-2005 |
| | | | | EP | 2161212 | A1 | 10-03-2010 |
| | | | | JP | 4721709 | B2 | 13-07-2011 |
| | | | | KR | 20050116822 | A | 13-12-2005 |
| | | | | US | 2006104550 | A1 | 18-05-2006 |
| | | | | WO | 2004083065 | A1 | 30-09-2004 |
| WO 2011148992 | A1 | | 01-12-2011 | NONE | | | |
| JP 2000142731 | A | | 23-05-2000 | JP | 4146007 | B2 | 03-09-2008 |
| | | | | JP | 2000142731 | A | 23-05-2000 |
| JP 2009112542 | A | | 28-05-2009 | JP | 5073453 | B2 | 14-11-2012 |
| | | | | JP | 2009112542 | A | 28-05-2009 |
| JP 2003095286 | A | | 03-04-2003 | JP | 5043264 | B2 | 10-10-2012 |
| | | | | JP | 2003095286 | A | 03-04-2003 |

EPO FORM P0459

For more details about this annex : see Official Journal of the European Patent Office, No. 12/82

**EP 2 805 815 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7052961 A
- JP 2005154690 A

13